# DEMANDE DE BREVET EUROPEEN

(11) **EP 1 351 084 A1**
(43) Date de publication de la demande: **08.10.2003**
(21) Numéro de dépôt: 03290718.0
(22) Date de dépôt: 21.03.2003
(51) Int. Cl.: G02B 6/44

(54) **Câble à fibres optiques et procédé de fabrication**

(30) Priorité: 02.04.2002 FR 0204085
(71) Demandeur: ALCATEL, 75008 Paris (FR)
(72) Inventeur: Bourget, Vincent, 78160 Marly le Roi (FR)
(74) Mandataire: Vigand, Régis Louis Michel

(57) **Abrégé**

Ce câble (10) à fibres optiques comprend une gaine (18), dans laquelle sont logées des fibres optiques (12), et une armature (14) de renfort sensiblement annulaire, intercalée radialement entre les fibres optiques (12) et la gaine (18). L'armature (14) comprend une fente (20) s'étendant dans la direction générale longitudinale de l'armature (14). La fente (20) est délimitée par des bords (B1, B2) de l'armature (14) écartés ou jointifs. La fente (20) permet un accès aux fibres optiques (12) logées dans l'armature (14).

## Description

La présente invention concerne un câble à fibres optiques et un procédé de fabrication de ce câble.

Les câbles à fibres optiques, appelés par la suite câbles optiques, sont susceptibles de présenter des structures de différents types.

On connaît déjà dans l'état de la technique, notamment d'après US-A-6 091 871, un câble à fibres optiques du type comprenant une gaine, dans laquelle sont logées des fibres optiques, et une armature de renfort sensiblement annulaire, intercalée radialement entre les fibres optiques et la gaine.

Le câble optique décrit dans US-A-6 091 871 est du type appelé habituellement « uni-tube ». Ce type de câble optique comprend un nombre relativement faible de fibres optiques. Les fibres optiques sont logées dans un tube unique revêtu de la gaine. Des éléments filiformes formant renforts de traction, appelés habituellement porteurs, sont noyés dans une paroi délimitant la gaine. La présence des porteurs limite les possibilités de réduire le diamètre de la gaine.

L'invention a pour but de proposer un câble optique comprenant un nombre relativement faible de fibres optiques (par exemple une douzaine de fibres optiques) ayant un diamètre aussi petit que possible, ceci en conservant les caractéristiques habituellement souhaitées pour ce type de câble, à savoir une bonne résistance à l'écrasement et à la traction et une faible contraction à froid.

A cet effet, l'invention a pour objet un câble à fibres optiques du type précité, **caractérisé en ce que** l'armature comprend une fente s'étendant dans la direction générale longitudinale de l'armature, cette fente étant délimitée par des bords de l'armature écartés ou jointifs et permettant un accès aux fibres optiques logées dans l'armature.

Suivant des caractéristiques de différents modes de réalisation de ce câble optique :
- les bords de l'armature délimitant la fente d'accès sont écartés d'une distance supérieure au diamètre d'une fibre optique ;
- l'armature comprend deux demi-armatures longitudinales, chaque demi-armature étant munie de bords de contact avec l'autre demi-armature, les bords de contact des deux demi-armatures formant des bords jointifs délimitant deux fentes d'accès aux fibres optiques ;
- le câble optique comprend des moyens déchirables ou sécables de maintien des deux demi-armatures l'une contre l'autre ;
- les moyens de maintien des demi-armatures comprennent un lien enroulé autour de l'armature ;
- l'armature est en matériau synthétique ;
- le matériau synthétique de l'armature est renforcé avec des fibres, notamment des fibres de verre, ce matériau synthétique étant notamment du type désigné par le sigle anglo-saxon FRP (Fiber Reinforced Plastic) ou GRP (Glass-fiber Reinforced Plastic) ;
- le matériau synthétique de l'armature est un matériau thermoplastique ;
- l'armature est en métal, notamment en acier ;
- les bords de l'armature délimitant la fente d'accès sont rectilignes ;
- les bords de l'armature délimitant la fente d'accès s'étendent suivant un trajet évoluant longitudinalement en SZ ;
- un matériau de remplissage, notamment sous la forme d'un gel ou d'une poudre, est logé dans l'armature.

L'invention a également pour objet un procédé de fabrication d'un câble optique tel que défini ci-dessus, **caractérisé en ce que :**
- on fabrique l'armature,
- on loge les fibres optiques dans l'armature de façon à former un ensemble armature-fibres optiques appelé ensemble optique, et
- on extrude la gaine autour de l'ensemble optique.

Suivant une autre caractéristique de ce procédé, préalablement à l'extrusion de la gaine, on place dans l'armature le matériau de remplissage.

L'invention sera mieux comprise à la lecture de la description qui va suivre, donnée uniquement à titre d'exemple et faite en se référant aux dessins annexés dans lesquels :
- la figure 1 est une vue en coupe transversale d'un câble à fibres optiques selon un premier mode de réalisation de l'invention ;
- la figure 2 est une vue similaire à la figure 1 d'un câble à fibres optiques selon un second mode de réalisation de l'invention ;
- la figure 3 est une vue de côté du câble optique représenté sur la figure 2.

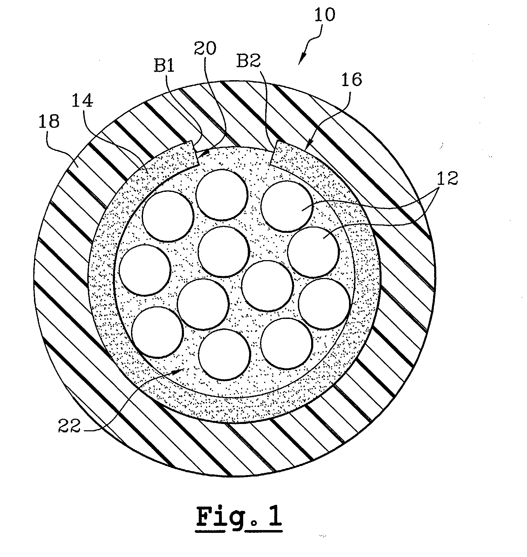

On a représenté sur la figure 1 un câble à fibres optiques selon un premier mode de réalisation de l'invention, désigné par la référence générale 10.

Le câble optique 10 comprend un faisceau de fibres optiques classiques 12. Ce faisceau est logé dans une armature de renfort 14 sensiblement annulaire. L'ensemble armature 14 - fibres optiques 12 sera appelé par la suite ensemble optique 16.

L'ensemble optique 16 est revêtu d'une gaine 18. L'armature 14 est donc intercalée radialement entre les fibres optiques 12 et la gaine 18.

De préférence, l'armature 14 est la seule armature du câble 10.

Le câble optique 10 comprend un nombre relativement limité de fibres optiques 12, par exemple une douzaine.

Dans l'exemple illustré sur les figures, l'armature 14 est en matériau synthétique renforcé, le cas échéant, avec des fibres, notamment des fibres de verre, de façon à limiter la contraction du câble optique 10 à froid. Ce matériau synthétique peut être notamment du type désigné par le sigle anglo-saxon FRP (Fiber Reinforced Plastic) ou GRP (Glass-fiber Reinforced Plastic). Le matériau synthétique peut également être un matériau thermoplastique renforcé avec des fibres de verre notamment sous forme de mèches.

En variante, l'armature 14 peut être réalisée en métal, notamment en acier, par exemple en roulant une tôle en acier.

La gaine 18 est fabriquée dans un matériau synthétique classique. Ce matériau classique est par exemple du polyéthylène linéaire à basse densité désigné habituellement par le sigle anglo-saxon LLDPE (Linear Low Density Polyethylene) ou bien du polyéthylène à haute densité désigné habituellement par le sigle anglo-saxon HDPE (High Density Polyethylene).

Selon l'invention, l'armature 14 comprend une fente 20 s'étendant dans la direction générale longitudinale de l'armature 14. Cette fente 20 permet un accès aisé aux fibres optiques 12 logées dans l'armature 14.

Dans le premier mode de réalisation de l'invention, la fente 20 est délimitée par des bords B1, B2 de l'armature 14 écartés d'une distance relativement faible mais supérieure au diamètre d'une fibre optique 12.

On notera également que, dans le premier mode de réalisation de l'invention, les bords B1, B2 de l'armature 14 délimitant la fente 20 sont rectilignes. En variante, les bords B1, B2 de l'armature 14 délimitant la fente 20 pourraient s'étendre suivant un trajet évoluant longitudinalement en SZ.

De préférence, un matériau de remplissage 22, de type classique, est logé dans l'armature 14. Ce matériau, notamment sous la forme d'un gel ou d'une poudre, participe à l'étanchéité du câble optique 10 et à la protection des fibres optiques 12 lors de l'extrusion de la gaine 18.

Pour fabriquer le câble optique 10, on procède de préférence de la façon suivante.

Tout d'abord, on fabrique l'armature 14 par exemple par extrusion si cette armature 14 est en matériau synthétique ou bien par pliage d'une tôle si cette armature 14 est métallique.

Puis, préalablement à l'extrusion de la gaine 18, on loge les fibres optiques 12 dans l'armature 14 de façon à former l'ensemble optique 16. Les fibres optiques 12 sont introduites dans l'armature 14 à travers la fente 20.

Le matériau de remplissage 22 est introduit dans l'armature 14 préalablement à l'extrusion de la gaine 18. De préférence, l'introduction du matériau de remplissage 22 dans l'armature 14 se fait de façon concomitante avec l'introduction des fibres optiques 12 dans cette armature 14.

Le cas échéant, la fabrication de l'ensemble optique 16 peut être réalisée dans une installation distincte de l'installation dans laquelle est réalisée l'extrusion de la gaine 18 autour de l'ensemble optique 16. Ceci autorise la sous-traitance de la fabrication de l'ensemble optique 16.

L'armature 14 confère au câble optique 10 une bonne résistance à l'écrasement et à la traction et garantit une faible contraction à froid de ce câble optique 10.

Par conséquent, il n'est pas nécessaire, pour obtenir les caractéristiques ci-dessus, de loger dans la gaine 18 des éléments de renfort tels que des porteurs ou des fibres de verre.

De ce fait, l'étape d'extrusion de la gaine 18 autour de l'ensemble optique 16 peut être réalisée rapidement et l'épaisseur de la gaine 18 peut être limitée ce qui réduit d'autant le diamètre externe du câble optique 10.

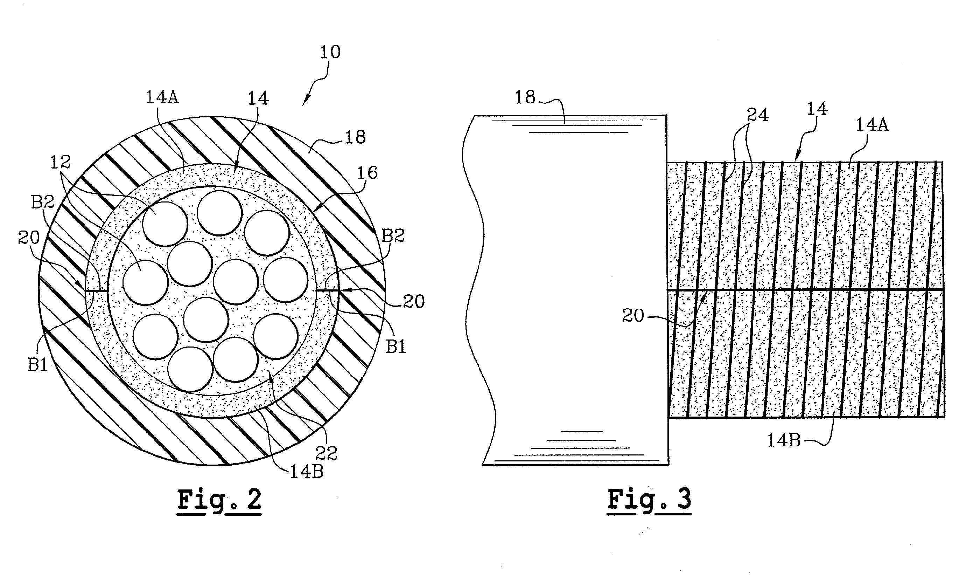

Sur les figures 2 et 3, on a représenté un câble optique 10 selon un second mode de réalisation de l'invention. Sur ces figures, les éléments analogues à ceux des figures précédentes sont désignés par des références identiques.

Dans ce cas, l'armature 14 comprend deux demi-armatures longitudinales 14A, 14B. Chaque demi-armature 14A, 14B est munie de bords B1, B2 de contact avec l'autre demi-armature 14B, 14A. Les bords de contact B1, B2 des deux demi-armatures 14A, 14B forment des bords jointifs délimitant deux fentes 20 d'accès aux fibres optiques 12. Les bords B1, B2 de l'armature 14 délimitant les deux fentes 20 sont de préférence rectilignes.

Les deux demi-armatures 14A, 14B sont maintenues l'une contre l'autre à l'aide de moyens déchirables ou sécables. Ces moyens comprennent par exemple un lien 24 enroulé autour de l'armature 14 (guipage). Le lien 24 peut être filiforme ou avoir une forme générale de ruban. Le lien 24 est fabriqué par exemple dans un matériau tel que le polyester, le nylon ® ou l'aramide.

Parmi les avantages de l'invention, on notera que celle-ci permet un accès facile au fibres optiques 12 du câble optique 10 et ainsi un raccordement aisé de ces fibres optiques 12.

En effet, dans le câble optique 10 selon le premier mode de réalisation de l'invention, l'utilisateur accède aux fibres optiques 12 en découpant la gaine 18 au droit de la fente 20. Les fibres optiques 12 peuvent être extraites facilement de l'armature 14 à travers cette fente 20.

Dans le câble optique 10 selon le second mode de réalisation de l'invention, l'utilisateur accède aux fibres optiques 12 en découpant la gaine 18 et en sectionnant ou en déchirant le lien 24 maintenant les deux demi-armatures 14A, 14B l'une contre l'autre. Les deux demi-armatures 14A, 14B peuvent alors être écartées l'une de l'autre de façon à ouvrir une des fentes 20 et à donner accès aux fibres optiques 12 logées dans l'armature 14.

L'invention permet donc de proposer un câble optique, comprenant un nombre relativement faible de fibres optiques, ayant un diamètre réduit, ceci en conservant grâce à l'armature de renfort 14 les caractéristiques habituellement souhaitées pour ce type de câble, à savoir une bonne résistance à l'écrasement et à la traction et une faible contraction à froid.

On notera que le câble optique 10 selon l'invention est constitué d'un nombre limité de composants et de matériaux.

Par ailleurs, l'invention permet d'accéder facilement aux fibres optiques 12 du câble optique 10, même en milieu de câble par incision de la gaine 18. Les fibres optiques 12 peuvent ainsi être raccordées par piquage du câble optique 10.

Une fois l'armature 14 mise à nue, au moins partiellement, l'accès aux fibres 12 se fait sans outil par passage à travers la fente 20.

La fente 20 est libre, c'est-à-dire non bouchée. En effet, la fente 20 n'est pas bouchée par une colle ou par une soudure.

## Revendications

1. Câble (10) à fibres optiques (12) du type comprenant une gaine (18), dans laquelle sont logées des fibres optiques (12), et une armature (14) de renfort sensiblement annulaire, intercalée radialement entre les fibres optiques (12) et la gaine (18), **caractérisé en ce que** l'armature (14) comprend une fente (20) s'étendant dans la direction générale longitudinale de l'armature (14), cette fente (20) étant délimitée par des bords (B1, B2) de l'armature (14) écartés ou jointifs et permettant un accès aux fibres optiques (12) logées dans l'armature (14).

2. Câble (10) selon la revendication 1, **caractérisé en ce que** les bords (B1, B2) de l'armature (14) délimitant la fente (20) d'accès sont écartés d'une distance supérieure au diamètre d'une fibre optique (12).

3. Câble (10) selon la revendication 1, **caractérisé en ce que** l'armature (14) comprend deux demi-armatures (14A, 14B) longitudinales, chaque demi-armature (14A, 14B) étant munie de bords (B1, B2) de contact avec l'autre demi-armature, les bords (B1, B2) de contact des deux demi-armatures (14A, 14B) formant des bords (B1, B2) jointifs délimitant deux fentes (20) d'accès aux fibres optiques (12).

4. Câble (10) selon la revendication 3, **caractérisé en ce qu'**il comprend des moyens (24) déchirables ou sécables de maintien des deux demi-armatures (14A, 14B) l'une contre l'autre.

5. Câble (10) selon la revendication 4, **caractérisé en ce que** les moyens de maintien des demi-armatures (14A, 14B) comprennent un lien (24) enroulé autour de l'armature (14).

6. Câble (10) selon l'une quelconque des revendications 1 à 5, **caractérisé en ce que** l'armature (14) est en matériau synthétique.

7. Câble (10) selon la revendication 6, **caractérisé en ce que** le matériau synthétique de l'armature (14) est renforcé avec des fibres, notamment des fibres de verre, ce matériau synthétique étant notamment du type désigné par le sigle anglo-saxon FRP (Fiber Reinforced Plastic) ou GRP (Glass-fiber Reinforced Plastic).

8. Câble (10) selon la revendication 6 ou 7, **caractérisé en ce que** le matériau synthétique de l'armature (14) est un matériau thermoplastique.

9. Câble (10) selon l'une quelconque des revendications 1 à 5, **caractérisé en ce que** l'armature (14) est en métal, notamment en acier.

10. Câble (10) selon l'une quelconque des revendications 1 à 9, **caractérisé en ce que** les bords (B1, B2) de l'armature (14) délimitant la fente (20) d'accès sont rectilignes.

11. Câble (10) selon l'une quelconque des revendications 1 à 9, **caractérisé en ce que** les bords (B1, B2) de l'armature (14) délimitant la fente d'accès (20) s'étendent suivant un trajet évoluant longitudinalement en SZ.

12. Câble (10) selon l'une quelconque des revendications 1 à 11, **caractérisé en ce qu'**un matériau de remplissage (22), notamment sous la forme d'un gel ou d'une poudre, est logé dans l'armature (14).

13. Procédé de fabrication d'un câble optique (10) selon l'une quelconque des revendications 1 à 12, **caractérisé en ce que :**
- on fabrique l'armature (14),
- on loge les fibres optiques (12) dans l'armature (14) de façon à former un ensemble armature (14)-fibres optiques (12) appelé ensemble optique (16), et
- on extrude la gaine (18) autour de l'ensemble optique (16).

14. Procédé selon la revendication 13 de fabrication d'un câble selon la revendication 12, **caractérisé en ce que**, préalablement à l'extrusion de la gaine (18), on place dans l'armature (14) le matériau de remplissage (22).
